# EUROPEAN PATENT APPLICATION

(11) **EP 1 849 849 A1**
(43) Date of publication of application: **31.10.2007**
(21) Application number: 06712304.2
(22) Date of filing: 25.01.2006
(51) Int. Cl.: C10B 53/00, C10B 49/04

(54) **CARBONIZATION APPARATUS**

(30) Priority: 02.02.2005 JP 2005026551
(71) Applicant: SUNTORY LIMITED, Osaka-shi, Osaka 530-8203 (JP)
(72) Inventor: SUGIMOTO, Takekazu, gun, Osaka, 6180001 (JP); UEDA, Sadatoshi, , Chiba, 2630041 (JP); MIYAHARA, Shigeru, , 3010044 (JP)
(74) Representative: Vossius & Partner
(86) International application number: PCT/JP2006/301109
(87) International publication number: WO 2006/082737

(57) **Abstract**

This invention provides a carbonizing apparatus for easily carbonizing a material to a desired state of carbonization, which apparatus requires a reduced installation space, and lowers concentration of harmful gases contained in an exhaust gas. The interior of a cylindrical furnace body 82 having a vertical axis is divided by a partition wall 83 into an upper furnace body acting as a combustion section 80 and a lower furnace body acting as a carbonization section 6. The partition wall 83 defines a through hole for supplying distillation gas to the combustion section 80. The carbonization section 6 has a vertical structure, with a supply part 33 disposed in an upper portion for supplying a material under treatment 1, and a carbide take-out part 35 and a first blowoff part 36 of spontaneous combustion air disposed in a lower portion, so that the material under treatment 1 is movable by gravity toward the take-out part 35. An agitating device 39 includes agitating members 43 revolvable about a vertical axis. A premix combustion section 81 is provided on the combustion part 80 side of the partition wall 83 for mixing a distillation gas having passed through the through-hole with an exhaust gas discharged from a discharge part 34 and burning the mixture. Gas having passed through the premix combustion section 81 is supplied to the combustion section 80.

## Description

### TECHNICAL FIELD

This invention relates to a carbonizing apparatus comprising a carbonization section including a supply part for supplying a material under treatment, an agitating device for agitating the material under treatment supplied from the supply part, a first blowoff part for blowing off spontaneous combustion air for the material under treatment, adjusting means for adjusting quantity of the air blown from the first blowoff part, and a take-out part for taking out carbide produced by carbonizing the material under treatment, the material under treatment supplied from the supply part being moved toward the take-out part while being agitated by the agitating device and undergoing spontaneous combustion, whereby the material under treatment is carbonized and the carbide is taken out through the take-out part, a second blowoff part for blowing off combustion air for distillation gas generating in the carbonization section, an exhaust gas discharge part, and a combustion section for burning the distillation gas.

### BACKGROUND ART

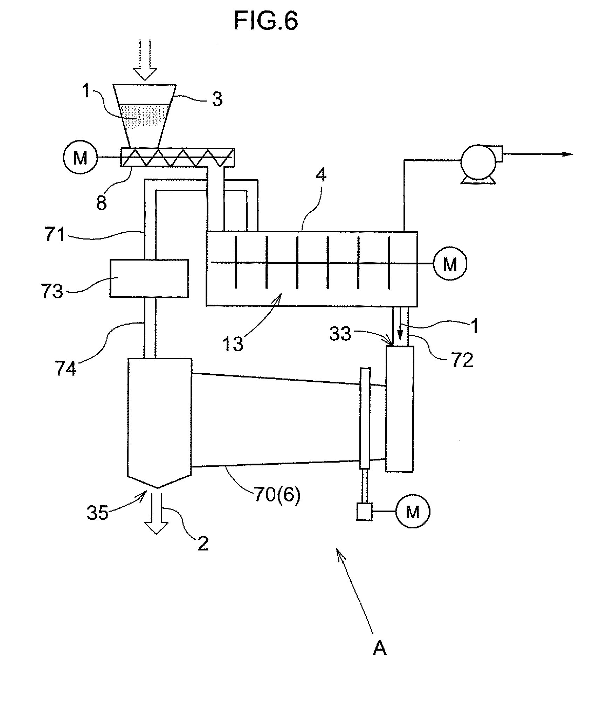

A carbonizing apparatus A' shown in Fig. 6 as a comparative example of this invention illustrates one construction of carbonizing apparatus according to the known art. This carbonizing apparatus A' includes a rotary kiln 270 (carbonization section) for carbonizing a material under treatment 1' while moving the material from one end toward the other end, a drier 204 having a drying chamber 213 for drying the material under treatment 1', a drying gas supplying path 271 for supplying a high temperature gas in the rotary kiln 270 as drying gas into the drying chamber 213, and a dried material supplying path 272 for supplying the material under treatment 1' dried in the drying chamber 213 to the one end of the rotary kiln 270. This apparatus is constructed to transport the material under treatment 1' in a hopper 203 to the drying chamber 213 by a screw conveyor 208, supply the dried material 1 to the one end of the rotary kiln 270, carbonize the material while moving the material toward a take-out part 235 at the other end of the rotary kiln 270, and take out carbide 2' from the take-out part 235.

Incidentally, in the case of the above apparatus, if an indirect heating system is employed to heat the material under treatment 1' from outside the rotary kiln 270, since the material under treatment 1 is moved toward the take-out part 235 to be carbonized while being dry-distilled, in order to carry out detoxication treatment for burning the distillation gas (thermal decomposition gas) generating within the rotary kiln 270 in a combustion chamber (combustion section) 273 separate from the rotary kiln 270, it is necessary to connect a duct 274 to the rotary kiln 270 for feeding the distillation gas from the rotary kiln 270 into the combustion chamber 273, and to feed the combustion gas generating in the combustion chamber 273 to the drying chamber 213 through the drying gas supplying path 271. In this case, a substance produced from the distillation gas condensed within the duct 274 tends to collect in the duct 274, which gives rise to a problem that it takes time and effort in maintenance for securing passage in the duct 274.

On the other hand, if a direct heating system is employed to heat the material under treatment 1' by supplying hot wind inside the rotary kiln 270, air for spontaneous combustion of the material under treatment 1 is supplied from the one end of the rotary kiln 270, the material under treatment 1', while being in spontaneous combustion, is moved toward the take-out part 235 and carbonized. In order to avoid a situation where the air for spontaneous combustion becomes insufficient so that the material under treatment 1' cannot fully be carbonized, or the air for spontaneous combustion becomes excessive so that the material under treatment is burned out, it is necessary to supply the air for spontaneous combustion as properly distributed along the direction of movement of the material under treatment. Hence, this system has a disadvantage that supplying of the air for spontaneous combustion is difficult. Moreover, as in the case of the above-noted indirect heating system, in order to carry out detoxication treatment for burning the distillation gas (thermal decomposition gas) generating within the rotary kiln 270, in the combustion chamber (combustion section) 273 separate from the rotary kiln 270, it is necessary, again, to connect the duct 274 to the rotary kiln 270 for feeding the distillation gas from the rotary kiln 270 into the combustion chamber 273.

Further, in the case of the indirect heating system, and also in the case of the direct heating system, the duct 274 for feeding the distillation gas from the rotary kiln 270 into the separate combustion chamber 273, a supply part 233 for feeding the material under treatment 1' to the rotary kiln 270, and the take-out part 235 for taking the carbide out of the rotary kiln 270, must be provided slidable relative to the rotary kiln 270 which is driven to rotate. Therefore, air can easily enter the rotary kiln 270 through sliding parts between these components and the rotary kiln 270. As a result, there is also a problem that temperature control of the material under treatment 1' in the rotary kiln 270 is difficult.

Then, a carbonizing apparatus described in Patent Document 1 noted hereunder includes a carbonization section of the nonrotating type which does not require an arrangement slidable relative thereto of a supply part of a material under treatment and a carbide take out part, so that the high temperature gas of the carbonization section does not easily leak outside. The supply part of the material under treatment and the take-out part of the carbide generating from the material under treatment are arranged, for example, right and left of this carbonization section. In the carbonizing apparatus of Patent Document 1, a first blowoff part is disposed in the bottom of the carbonization section between the supply part and take-out part to be capable of adjusting the blowoff quantity of air for spontaneous combustion for each section of movement of the material under treatment to facilitate proper distribution of the air for spontaneous combustion of the material under treatment along the direction of movement of the material under treatment. A second blowoff part is provided for blowing off combustion air for the distillation gas generating in the carbonization section, along with a discharge part of exhaust gas. Further, to avoid distillation gas or the like condensing and collecting in a duct for feeding the gas to a combustion section, the combustion section for burning the distillation gas is connected to a distillation gas exhaust part disposed above and adjacent the take-out part of the carbonization section.

The above construction includes a screw conveyor for transporting the material under treatment substantially horizontally through the carbonization section from the supply part toward the take-out part, and an agitating device with agitating vanes rotatable with the screw conveyor for agitating the material under treatment in the carbonization section. While agitating the material under treatment supplied from the supply part about a horizontal axis, and while causing its spontaneous combustion, the construction employed moves the material substantially horizontally with the screw conveyor toward the take-out part. That is, carbide can be taken out of the take-out part while carbonizing the material under treatment. The second blowoff part is provided in the connection to the carbonization section to supply combustion air to the combustion section as required to carry out complete combustion of the distillation gas.
Patent Document 1: Japanese Unexamined Patent Publication No. 2000-136390

### DISCLOSURE OF THE INVENTION

### PROBLEM TO BE SOLVED BY THE INVENTION

However, in the conventional carbonizing apparatus noted above, since the carbonization section has a construction for carbonizing the material under treatment while moving the material substantially horizontally toward the take-out part, the material under treatment deposited in an upper part of the carbonization section tends to be exposed to a higher temperature even if comparing the material under treatment elapsed substantially for the same period of time after fed into the carbonization section. Moreover, in this apparatus, the combustion chamber is connected to the distillation gas exhaust part disposed above and adjacent the take-out part of the carbonization section for burning the distillation gas, the relatively hot material under treatment having moved near the take-out part tends to be further heated by the heat generated in the combustion chamber. Since the control for maintaining the entire material under treatment at a predetermined carbonizing temperature becomes difficult for these reasons, there is a problem that the material under treatment can hardly be carbonized uniformly to a desired state of carbonization.

Since the supply part and take-out part are arranged at left and right of the carbonization section, in which the material under treatment supplied from the supply part is moved substantially horizontally toward the take-out part, there is a drawback of requiring a horizontally elongated, large installation space long in the direction of movement of the material under treatment.

Further, since the second blowoff part is provided to supply combustion air to the combustion section as required to carry out complete combustion of the distillation gas, oxygen concentration in the combustion section tends to become high to increase combustion temperature and to increase combustion speed. As a result, there is a problem that concentration of harmful gases such as of nitrogen oxide (NO_{X}) contained in the exhaust gas tends to become high.

Having regard to the problems of the prior art noted above, an object of this invention is to provide a carbonizing apparatus for easily carbonizing a material under treatment to a desired state of carbonization. Another object of this invention is to provide a carbonizing apparatus requiring a reduced installation space as compared with the carbonizing apparatus in the prior art, and capable of restraining concentration of harmful gases generated in exhaust gas discharged from a discharge part of a combustion section.

### MEANS FOR SOLVING THE PROBLEM

A first characteristic construction of this invention lies in a carbonizing apparatus comprising:
a carbonization section including a supply part for supplying a material under treatment, an agitating device for agitating the material under treatment supplied from the supply part, a first blowoff part for blowing off spontaneous combustion air for the material under treatment, adjusting means for adjusting quantity of the air blown from the first blowoff part, and a take-out part for taking out carbide produced by carbonizing the material under treatment;
the material under treatment supplied from the supply part being moved toward the take-out part while being agitated by the agitating device and undergoing spontaneous combustion, whereby the material under treatment is carbonized and the carbide is taken out through the take-out part;
a second blowoff part for blowing off combustion air for distillation gas generating in the carbonization section, an exhaust gas discharge part, and a combustion section for burning the distillation gas;
the carbonizing apparatus comprising a cylindrical furnace body having an axis extending vertically, with a partition wall dividing the interior of the cylindrical furnace body into an upper furnace body acting as the combustion section, and a lower furnace body acting as the carbonization section, the partition wall defining a through hole for supplying the distillation gas to the combustion section;
the carbonization section having a vertical structure, with the supply part disposed in an upper portion, and the take-out part and the first blowoff part disposed in a lower portion, so that the material under treatment is movable by gravity toward the take-out part, the carbide being taken out of the take-out part at adjustable speed, and the agitating device including agitating members revolvable about a vertical axis;
a premix combustion section being provided on a side opposed to the combustion section of the partition wall for mixing an exhaust gas discharged from the discharge part into the distillation gas having passed through the through hole to cause combustion, the gas having passed through the premix combustion section being supplied to the combustion section.

Thus, in the carbonizing apparatus according to the first characteristic construction of this invention, the furnace body is in the form of a cylinder having an axis extending vertically, and the interior of the cylindrical furnace body is divided into an upper furnace body acting as the combustion section, and a lower furnace body acting as the carbonization section. The carbonization section has a vertical structure, with the supply part disposed in an upper portion, and the take-out part and the first blowoff part disposed in a lower portion, so that the material under treatment is movable by gravity toward the take-out part. Therefore, this apparatus can be installed in an installation space of smaller area than a carbonizing apparatus in the prior art.
Since the carbonization section is formed by the partition wall under the combustion section, the material under treatment in the carbonization section can be carbonized with little influence of the combustion heat or combustion air in the combustion section. As a result, it is easy to control carbonizing treatment of the material under treatment in the carbonization section.

The speed of taking carbide out of the take-out part is adjustable, and the agitating device includes agitating members revolvable about a vertical axis. Thus, the material under treatment is easy to carbonize to a desired state of carbonization, and the quality of carbide is stabilized.
That is, since the agitating members revolvable about a vertical axis agitate the material under treatment substantially horizontally, there is little chance of intermingling between parts of the material under treatment supplied into the carbonization section at different times. Further, the spontaneous combustion air can be supplied from the first blowoff part disposed in a lower portion of the carbonization section to spread the spontaneous combustion air into the material under treatment uniformly. The spontaneous combustion air is distributed substantially evenly, thereby making it to easy to cause spontaneous combustion of the entire material under treatment in the carbonization section in a state of combustion according to the time elapsed after the material is supplied into the carbonization section. By adjusting the speed of taking out carbide, the speed of the material under treatment moving toward the take-out part by gravity can also be adjusted. It is thereby made possible to adjust freely the rate of carbonization reaction of the material under treatment. That is, for example, the material under treatment may be made to move slowly by gravity, and in parallel therewith, a reduced quantity of spontaneous combustion may be supplied, thereby to slow down the carbonization reaction of the material under treatment. Thus, the material under treatment may easily be carbonized to a desired state of carbonization.

Agitating the material under treatment with the agitating members prevents generation of tar which would cause cohesion of the material under treatment. This enables the material under treatment to move smoothly toward the take-out part by gravity. It is thereby made possible to stabilize the quality of carbide.

Further, the premix combustion section is provided on the side opposed to the combustion section of the partition wall for mixing the exhaust gas discharged from the discharge part into the distillation gas having passed through the through hole to cause its combustion. The gas having passed through the premix combustion section is supplied to the combustion section. It is thus possible to lower the concentration of harmful gases contained in the exhaust gas discharged from the discharge part of the combustion section.
That is, before burning in the combustion section the distillation gas produced in the carbonization section, the exhaust gas discharged from the discharge part of the combustion section, i.e. the exhaust gas with a low oxygen concentration, and a high concentration of water vapor having a large calorific capacity compared with fresh air, is mixed into the distillation gas in the premix combustion section. Thus, distillation gas can be burned slowly at low combustion temperature. As a result, generation of harmful gases such as of nitrogen oxide (NO_{X}) is inhibited.
Since the gas having passed through the premix combustion section, i.e. the gas with a reduced concentration of unburned distillation gas, is supplied to and burned in the combustion section, the unburned distillation gas may be burned slowly and at low combustion temperature in the combustion section also. Thus, generation of harmful gases such as of nitrogen oxide (NO_{X}) is inhibited.

Another characteristic construction of this invention lies in that the partition wall has a cylinder surrounding the through hole, the cylinder having an interior acting as the premix combustion section, and a plate covering an end of the cylinder opposed to the combustion section being disposed as spaced from the cylinder in a direction of cylinder axis.

With this characteristic construction, the distillation gas may easily be burned slowly and at low combustion temperature in the premix combustion section, with little possibility of being influenced by combustion heat or combustion air in the combustion section. The gas having passed through the premix combustion section is supplied to the combustion section as distributed around the plate, thereby inhibiting variations in the concentration of the unburned distillation gas in the combustion section. Thus, the unburned distillation gas may be burned slowly and at low combustion temperature in the combustion section also.

A further characteristic construction of this invention lies in further comprising an exhaust heat recovery boiler for recovering exhaust heat by heat exchange with the exhaust gas discharged from the discharge part, the exhaust gas having passed through the exhaust heat recovery boiler being supplied to the premix combustion section.

With this characteristic construction, the exhaust heat of the exhaust gas can be used effectively within a system of the carbonizing apparatus. Particularly since the exhaust gas having passed the exhaust heat recovery boiler is supplied to the premix combustion section, it is easy to burn the distillation gas slowly and at low combustion temperature by mixing the exhaust gas at low temperature into the distillation gas.

### BEST MODE FOR CARRYING OUT THE INVENTION

Embodiments of this invention will be described hereinafter with reference to the drawings.

### [First Embodiment]

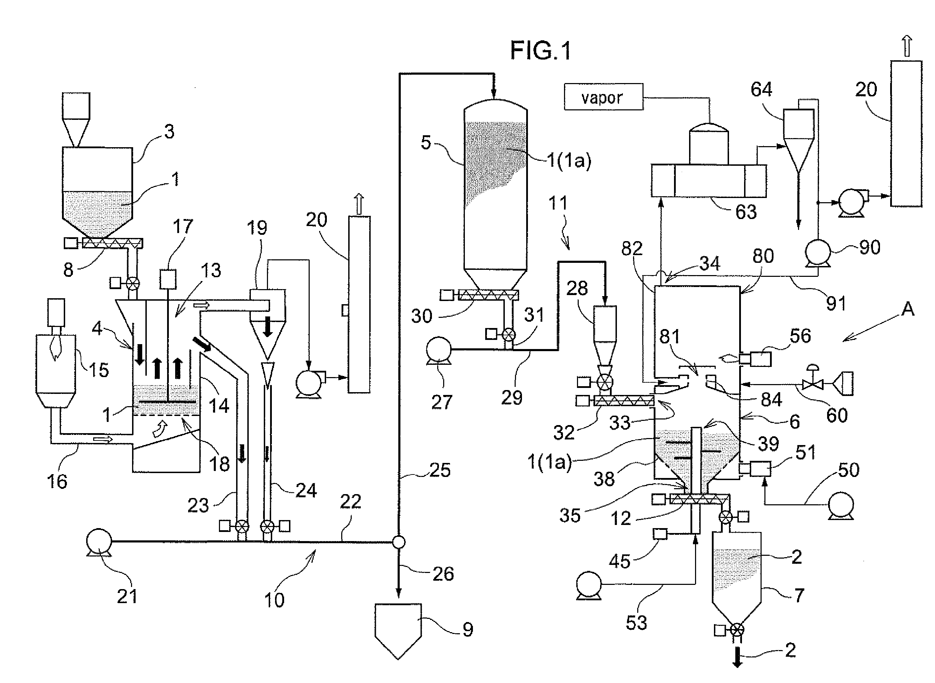

Fig. 1 shows a carbonizing system for carbonizing residues produced in a coffee extraction process, i.e. coffee grounds. This carbonizing system includes, mainly, a receiving hopper 3 into which coffee grounds are introduced as material under treatment 1, a drier 4 for drying the material under treatment 1, a dried material storage tank 5 for storing the dried material under treatment 1 (1a), a carbonizing apparatus A according to this invention for carrying out carbonizing treatment of the dry material under treatment 1a, and a carbide storage tank 7 for storing carbide 2 obtained.
This carbonizing system further includes a screw feeder 8 for transporting the material under treatment 1 in the receiving hopper 3 to the drier 4, a dry material transporting device 10 for transporting the dry material under treatment 1a dried in the drier 4 to the dry material storage tank 5 or a hopper 9 for delivery to the outside, a dry material feeding device 11 for feeding the dry material under treatment 1a in the dry material storage tank 5 to the carbonizing apparatus A, and a take-out screw conveyor 12 for transporting carbide 2 carbonized in the carbonizing apparatus A substantially horizontally toward the carbide storage tank 7. The take-out screw conveyor 12 is operable at adjustable transporting speed (i.e. speed of taking the carbide 2 out of a carbonization section 6).

The drier 4 includes a casing 14 having a drying chamber 13 for storing the material under treatment 1, a hot wind generator 15 for generating hot wind by burning a flammable gas such as town gas, a hot wind supply path 16 for supplying, as drying gas, the hot wind generated by the hot wind generator 15 to the drying chamber 13, an agitating device 17 for agitating the material under treatment 1 in the drying chamber 13, and a drying gas blowoff device 18 capable of forming a fluid bed by blowing off the drying gas from below to the material under treatment 1 in the drying chamber 13. Thus, the drier 4 can dry the material under treatment 1 in a floating state while agitating the material. The hot wind, after passing through the drying chamber 13, is stripped of fine materials under treatment contained therein by a cyclone separator 19, and is subsequently released outside as exhaust gas through a monitoring device 20 which monitors ratios such as of NOx, SOx and O₂.

The dry material transporting device 10 has a transport path 22 for transporting the dry material under treatment 1a by means of airflows sent from a blower 21. This transport path 22 has, connected to intermediate positions thereof, a dry material supply path 23 extending from the drying chamber 13 and a separated material supply path 24 extending from the cyclone separator 19. That is, it is possible to take the dry material under treatment 1a from the material under treatment 1 afloat in the drying chamber 13 and feed the dry material to the dry material storage tank 5 through a transport path for storage 25. Similarly, the separated material from the cyclone separator 19 can also be fed to the dry material storage tank 5 through the transport path for storage 25. The transport path 22 is branched at a downstream end thereof into the transport path for storage 25 and a transport path 26 for external take-out.

The dry material feeding device 11 has a feeding transport path 29 for transporting the dry material under treatment 1a by means of airflows sent from a blower 27 to a supply hopper 28 disposed upstream of the carbonization section 6. The feeding transport path 29 has, connected to one position thereof, a feeding path 31 for discharging into the feeding transport path 29 the dry material under treatment 1a taken from a lower part of the dry material storage tank 5 by a screw feeder 30. The dry material under treatment 1a in the supply hopper 28 is supplied to the carbonizing apparatus A by a screw feeder for supply 32 operable at an adjustable transporting speed (i.e. speed of feeding the dry material under treatment 1a).

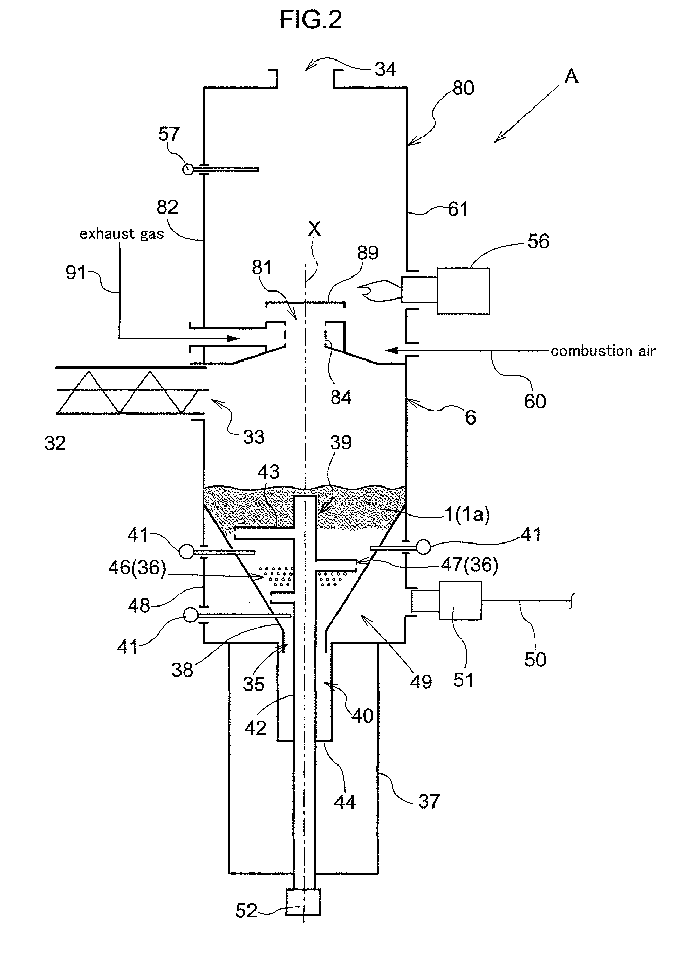

As shown in Figs. 2-4, the carbonizing apparatus A according to this invention includes a carbonization furnace 6 (an example of carbonization section) for changing the dry material under treatment 1a supplied through a supply part 33 into carbide 2, a combustion furnace 80 serving as combustion section for burning the distillation gas generated in the carbonization furnace 6, and a premix combustion section 81 for mixing an exhaust gas of the combustion furnace 80 into the distillation gas and starting combustion before burning the distillation gas in the combustion furnace 80. The carbonization furnace 6 adopts a treatment mode for gradually moving the dry material under treatment 1a supplied from the supply part 33 toward a take-out part 35, while agitating the material and while causing its spontaneous combustion. Hence, it is possible to take out carbonized carbide 2 from the take-out part 35, while carbonizing the dry material under treatment 1a.

That is, more particularly, the carbonizing apparatus A has a cylindrical furnace body 82 fixed to a mount 37 to have a vertical axis. The interior of the cylindrical furnace body 82 is divided by a partition wall 83 in the shape of a conical plane protruding upward progressively toward the center, into an upper furnace body serving as the combustion furnace 80, and a lower furnace body serving as the carbonization furnace 6. A through hole 84 is formed at the center of the partition wall 83 for enabling supply of the distillation gas from the carbonization furnace 6 to the combustion furnace 80. Since the premix combustion section 81 is provided adjacent the surface on the side of the combustion furnace 80 of the partition wall 83, it is possible to supply a gas including unburned distillation gas having passed through the premix combustion section 81 into the combustion furnace 80.

The carbonization furnace 6 has a vertical structure, with the supply part 33 of the dry material under treatment 1a disposed in an upper portion, while the take-out part 35 of carbide 2 obtained and a first blowoff part 36 for blowing off air for causing spontaneous combustion of the dry material under treatment 1a are arranged in a lower portion. The bottom of the carbonization furnace 6 is formed of a funnel-shaped bottom peripheral wall 38 progressively constricted downward. The take-out part 35 is disposed at the lower end of the bottom peripheral wall 38. Thus, the dry material under treatment 1a supplied by the screw feeder for supply 32 through the supply part 33 is movable by gravity along the funnel-like bottom peripheral wall 38 toward the take-out part 35.

The carbonization furnace 6 includes an agitating device 39 for agitating the dry material under treatment 1a in the carbonization furnace 6. A take-out path 40 is connected to the take-out part 35. A flow control device (not shown) such as a valve is provided for adjusting the flow rate of air blown from the first blowoff part 36. That is, the dry material under treatment 1a supplied from the supply part 33 moves by gravity toward the take-out part 35, while being continuously agitated by the agitating device 39 and undergoing spontaneous combustion. By adjusting the transporting speed of the screw conveyor 12 disposed in a lower position of the take-out path 40 in time of the above movement by gravity, it is possible to adjust extraction speed of the carbide 2 from the take-out part 35 and moving speed by gravity of the dry material under treatment 1a. As a result, a treatment mode is made possible in which, by moving the dry material under treatment 1a at low speed by gravity toward the take-out part 35, the dry material under treatment 1a can be carbonized slowly at low temperature, and carbide 2 taken from the take-out part 35 is transported to and stored in the carbide storage tank 7 by the take-out screw conveyor 12.

A temperature detecting part 41 is disposed inside the bottom peripheral wall 38 for detecting combustion temperature of the dry material under treatment 1a. It is thus possible to adjust the quantity of air blowoff from the first blowoff part 36 according to the temperature of the material under treatment 1a detected by the temperature detecting part 41. As the temperature detecting part 41, a thermo couple-type temperature sensor is applicable, for example.

The agitating device 39 has a drive shaft 42 supported to be rotatable about a substantially vertical axis X coaxial with the carbonization furnace 6, and a plurality of rod-like agitating members 43 connected to the drive shaft 42 at substantially right angles thereto at intervals longitudinally of the drive shaft 42, and shifted in angular phase circumferentially of the drive shaft 42. The dry material under treatment 1a can be agitated substantially horizontally by revolving the agitating members 43 about the vertical axis X through the rotating drive of the drive shaft 42.

Below the funnel-like bottom peripheral wall 38, a passage forming member 44 is obliquely provided to form the take-out path 40 extending obliquely downward. The drive shaft 42 is rotatably supported in gas-tight state inside the passage forming member 44. As shown in Fig. 1, the drive shaft 42 is rotatable by an electric motor 45 with a reduction device connected to the lower end of the drive shaft 42.

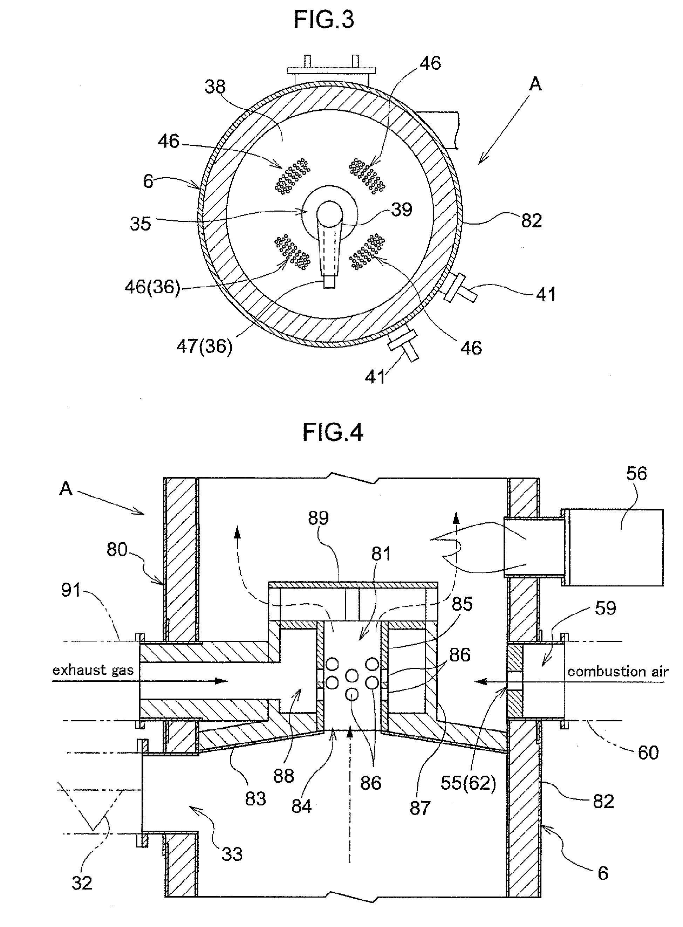

The first blowoff part 36 noted hereinbefore for blowing off air for spontaneous combustion of the dry material under treatment 1a, as shown in Figs. 2 and 3, includes lower blowoff parts 46 having a plurality of bores arranged adjacent a lower part of the bottom peripheral wall 38, and an agitating blowoff part 47 in the form of a passage inside each agitating member 43 formed of a hollow member.

To describe the lower blowoff parts 46 more particularly, first, the lower end of the cylindrical furnace body 82 forms a cylindrical casing 48 surrounding peripheries of the bottom peripheral wall 38. An annular air accumulator space 49 is formed between the bottom peripheral wall 38 and casing 48. An air supply path 50 is connected to the air accumulator space 49 for supplying air for spontaneous combustion under pressure. The bottom peripheral wall 38 has numerous small bores perforated therethrough, and these small bores constitute the lower blowoff parts 46 noted above. That is, the air for spontaneous combustion supplied under pressure through the air supply path 50 into the air accumulator space 49 is blown off steadily through these small bores substantially uniformly over a bottom area inside the carbonization furnace 6.

A starting ignition burner 51 is mounted in the air supply path 50 for lighting the dry material under treatment 1a in time of starting carbonization treatment. With this construction, after once lighting the dry material under treatment 1a, the dry material under treatment 1a supplied undergoes spontaneous combustion successively to be carbonized.

On the other hand, the agitating blowoff parts 47 are formed by the drive shaft 42 in the form of a hollow cylinder having a closed distal end, and the agitating members 43 in the form of hollow cylinders communicating with the hollow space in the drive shaft 42. Numerous perforations are formed at distal ends of the agitating members 43.
A spontaneous combustion air supply path 53 for supplying air under pressure is connected to the lower end of the drive shaft 42 through a rotary joint 52. Thus, while revolving the agitating members 43, air is blown off into the carbonization furnace 6 through the perforations formed in the agitating members 43. However, numerous perforations may be formed in the sides or in both the distal ends and sides of the agitating members 43.

Next, the premix combustion section 81, as shown in Fig. 4, is formed inside a cylinder 85 fixed to the partition wall 83 so as to surround peripheries of the through hole 84. More particularly, numerous exhaust gas inlet bores 86 are formed in the cylinder 85, and outer peripheries of the cylinder 85 are surrounded by a casing 87 having an inner space serving as an exhaust gas reservoir 88. The exhaust gas of the combustion furnace 80 introduced into this exhaust gas reservoir 88 flows into the cylinder 85 through the exhaust gas inlet bores 86. As a result, the exhaust gas is efficiently mixed into the distillation gas having flowed into the cylinder 85 from the carbonization furnace 6 located underneath.

Moreover, a circular plate 89 shaped to cover the end of the cylinder 85 opposed to the combustion furnace 80 is disposed with a predetermined spacing in the direction of the cylinder axis from the cylinder 85. Therefore, the gas including unburned mixed gas having passed through the premix combustion section unit 81 is supplied to the combustion furnace 80 as spread radially outwardly of the circular plate 89.

As shown in Fig. 2, the combustion furnace 80 is in the form of a vertical cylinder having an exhaust gas discharge part 34 disposed in an upper position thereof, and a second blowoff part 55 disposed in a lower position for blowing off combustion air for the distillation gas generating in the carbonization furnace 6. The second blowoff part 55 is formed adjacent the upper surface of the partition wall 83. An auxiliary burner 56 is disposed above the second blowoff part 55 to burn the distillation gas produced from the carbonizing treatment in the carbonization furnace 6. A thermo couple-type temperature sensor 57 is disposed on a side surface slightly above the vertically middle position of the combustion furnace 80 for detecting a combustion temperature of the distillation gas. As for the auxiliary burner 56, it is desirable to use it in time of starting the carbonizing treatment.

The second blowoff part 55 includes an air supply path 60 connected to a combustion furnace side wall 61 adjacent the upper surface of the partition wall 83 for supplying air such as ambient air under pressure into the combustion furnace 80, and an air supply perforation 62 formed in the combustion furnace side wall 61. The auxiliary burner 56 is disposed such that the blow off of the combustion gas direct tangentially with respect to a radial direction of the combustion furnace. The second blowoff part 55 may be disposed higher than the auxiliary burner 56.

The exhaust gas discharged from the discharge part 34 after burning the unburned distillation gas in the combustion furnace 80 is, as shown in Fig. 1, first passed through an exhaust heat recovery boiler 63, whereby the exhaust heat of the exhaust gas is recovered by heat exchange. Next, the exhaust gas exiting the exhaust heat recovery boiler 63 is passed through a cyclone separator 64, whereby solid content in the exhaust gas is separated and the separated solid content is discharged. The exhaust gas having passed through the cyclone separator 64 is branched to two channels. The exhaust gas entering one of the channels flows through an exhaust gas supply path 91 having a blower 90, to be introduced into the exhaust gas reservoir of the premix combustion section 81. The exhaust gas entering the other channel is released outside through the monitoring device 20 which monitors quantities such as of NO_{X}, SO_{X} and O₂.

[Table 1] shows results of comparison between carbide carbonized using the carbonization furnace 6 included in the carbonizing apparatus A according to this invention, carbide carbonized using the rotary kiln type carbonization furnace 6 included in the carbonizing apparatus A' shown in the comparative example, and carbide carbonized using the carbonization furnace included in the carbonizing apparatus of the conventional carbonization system described in Japanese Patent Publication No. 2000-136390. It is seen from [Table 1] that, with the carbonization furnace included in the carbonizing apparatus A' of the comparative example or the conventional carbonizing apparatus, only carbide with low added value can be obtained, which has a BET specific surface area (m²/g) as large as triple digits (carbonizing apparatus of the comparative example) or double digits (carbonizing apparatus of the conventional example), from high temperature and short-time carbonizing treatment in which the material under treatment 1 is kept in the carbonization furnace for 15 to 20 minutes, and that with the carbonizing apparatus A according to this invention, uniform carbide with high added value is obtained, which has a BET specific surface area (m²/g) as small as a single digit, from low temperature and long-time carbonizing treatment in which the material under treatment 1 is kept in the carbonization furnace 6 for 90 minutes.

**[Table 1]**

| | carbonizing apparatus of this invention | carbonizing apparatus of conventional example | carbonizing apparatus of comparative example |
|---|---|---|---|
| carbide keeping time | 90 minutes | 15-20 minutes | 15-20 minutes |
| BET specific surface area (m²/g) of carbide | <10 | <100 | <1000 |

### [Second Embodiment]

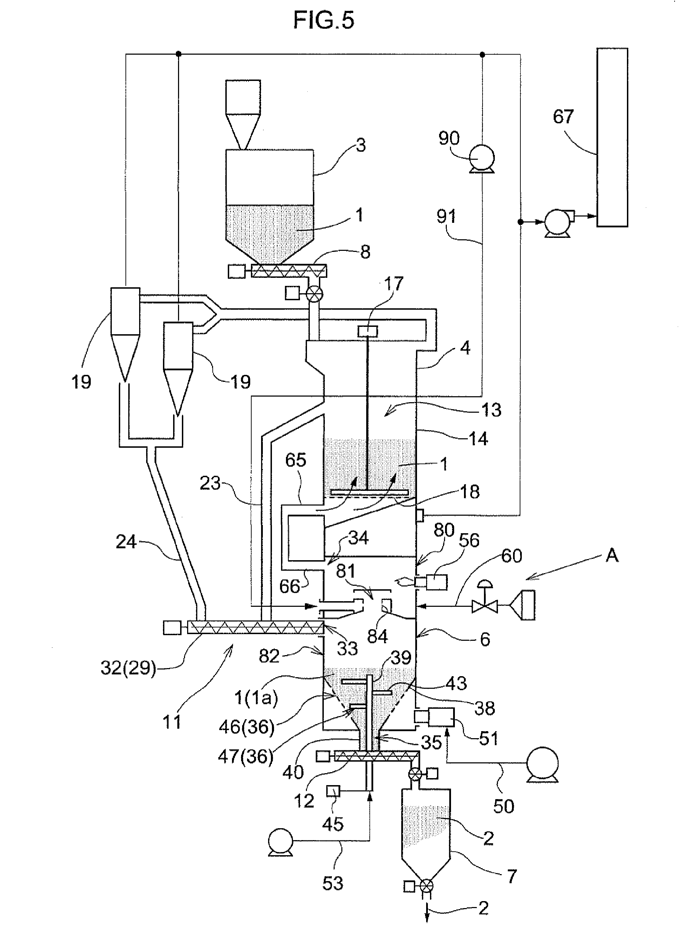

Fig. 5 shows a different embodiment of a carbonizing system according to this invention. In this carbonizing system, a cylindrical drier 104 is disposed on top of and coaxially and integrally with a carbonizing apparatus A. As a drying gas supply path 166 for supplying the drier 104 with exhaust gas generating in a combustion furnace 180 of the carbonizing apparatus A as drying gas, a duct 165 connecting an exhaust outlet 134 of the combustion furnace 180 and a drying chamber 113 of the drier 104 extends outside the combustion furnace 180. Further, a drying gas blowoff device 118 is provided that can form a fluid bed by blowing off the drying gas to material under treatment 1 in the drying chamber 113 from below. Thus, the material under treatment 1 can be dried while being agitated in a floating state.

The drying gas having passed through the drying chamber 113 is stripped of fine particles of the material under treatment and the like in a cyclone separator 119. The drying gas having passed through the cyclone separator 119 is treated as exhaust gas. One part of this exhaust gas is introduced into an exhaust gas reservoir of a premix combustion section 181 through an exhaust gas supply path 191 having a blower 190. The remaining exhaust gas is released outside through an exhaust stack 167. Excess part of the exhaust gas supplied to the drier 104 also is released outside through the exhaust stack 167.

As a dry material supply device 111, a supplying transport path 129 is provided which consists of a screw conveyor 132 for transporting dry material under treatment 1a to a supply part 133 of a carbonization furnace 106. This supplying transport path 129 has, connected thereto, a dry material supply path 123 extending from the drying chamber 113 and a separated material supply path 124 extending from the cyclone separator 119. Thus, the dry material under treatment 1a taken from the material under treatment 1 afloat in the drying chamber 113 and the separated material from the cyclone separator 119 can be fed to the supply part 133 of the carbonization furnace 106.
The other components including the carbide storage tank 7, funnel-like bottom peripheral wall 38, agitating device 39 including the drive shaft 42 and agitating members 43, electric motor 45 with a reduction device for driving the drive shaft 42, air supply path 50, starting ignition burner 51 and spontaneous combustion air supply path 53 are the same as in the first embodiment.

[Other Embodiments]
1. The carbonizing apparatus according to this invention is usable as an apparatus for carbonizing not only coffee grounds but also various other organic materials such as tea grounds, husks, sawdust and buckwheat chaff as materials under treatment.
2. As a mechanism for maintaining combustion temperature in the carbonization furnace within a predetermined range, a control device may be used for controlling the feed rate of spontaneous combustion air into the carbonization furnace based on a result of detection of the combustion temperature of the dry material under treatment in the carbonization furnace.

### INDUSTRIAL UTILITY

The carbonizing apparatus may be used for carbonizing various organic materials as materials under treatment such as grounds after extracting coffee, tea grounds, husks, sawdust and buckwheat chaff. In particular, the carbonizing apparatus may be used for easily carbonizing a material under treatment to a desired state of carbonization, which apparatus requires a reduced installation space as compared with a carbonizing apparatus in the prior art, and is capable of restraining concentration of harmful gases generated in exhaust gas discharged from a discharge part of a combustion section.

### BRIEF DESCRIPTION OF THE DRAWINGS

[Fig. 1] Schematic view of a carbonizing system
[Fig. 2] Schematic view in vertical section of a carbonizing apparatus
[Fig. 3] Lateral section of a principal portion of the carbonizing apparatus
[Fig. 4] Vertical section of a principal portion of the carbonizing apparatus
[Fig. 5] Schematic view of a carbonizing system in a second embodiment
[Fig. 6] Schematic view of a comparative example of carbonizing system

### DESCRIPTION OF THE REFERENCE SIGNS

- 1: material under treatment
- 2: carbide
- 6: carbonization furnace (carbonization section)
- 33: supply part
- 34: discharge part
- 35: take-out part
- 36: first blowoff part
- 39: agitating device
- 43: agitating members
- 55: second blowoff part
- 63: exhaust heat recovery boiler
- 80: combustion section
- 81: premix combustion section
- 82: cylindrical furnace body
- 83: partition wall
- 84: through hole
- 85: cylinder
- X: vertical axis

## Claims

1. A carbonizing apparatus comprising:
a carbonization section including a supply part for supplying a material under treatment, an agitating device for agitating the material under treatment supplied from the supply part, a first blowoff part for blowing off spontaneous combustion air for the material under treatment, adjusting means for adjusting quantity of the air blown from said first blowoff part, and a take-out part for taking out carbide produced by carbonizing the material under treatment;
the material under treatment supplied from said supply part being moved toward said take-out part while being agitated by said agitating device and undergoing spontaneous combustion, whereby the material under treatment is carbonized and the carbide is taken out through said take-out part;
a second blowoff part for blowing off combustion air for distillation gas generating in said carbonization section, an exhaust gas discharge part, and a combustion section for burning said distillation gas;
said carbonizing apparatus comprising a cylindrical furnace body having an axis extending vertically, with a partition wall dividing the interior of said cylindrical furnace body into an upper furnace body acting as said combustion section, and a lower furnace body acting as said carbonization section, said partition wall defining a through hole for supplying said distillation gas to said combustion section;
said carbonization section having a vertical structure, with said supply part disposed in an upper portion, and said take-out part and said first blowoff part disposed in a lower portion, so that the material under treatment is movable by gravity toward said take-out part, the carbide being taken out of said take-out part at adjustable speed, and said agitating device including agitating members revolvable about a vertical axis;
a premix combustion section being provided on a side opposed to said combustion section of said partition wall for mixing an exhaust gas discharged from said discharge part into the distillation gas having passed through said through hole to cause combustion, the gas having passed through said premix combustion section being supplied to said combustion section.

2. A carbonizing apparatus as defined in claim 1, wherein said partition wall has a cylinder surrounding said through hole, the cylinder having an interior acting as said premix combustion section, and a plate covering an end of said cylinder opposed to said combustion section being disposed as spaced from said cylinder in a direction of cylinder axis.

3. A carbonizing apparatus as defined in claim 1 or 2, further comprising an exhaust heat recovery boiler for recovering exhaust heat by heat exchange with the exhaust gas discharged from said discharge part, the exhaust gas having passed through said exhaust heat recovery boiler being supplied to said premix combustion section.
